# EUROPEAN PATENT APPLICATION

(11) **EP 1 698 449 A1**
(43) Date of publication of application: **06.09.2006**
(21) Application number: 06004291.8
(22) Date of filing: 02.03.2006
(51) Int. Cl.: B31B 19/84, B31B 19/64, B29C 65/78, B29C 65/02, B29C 65/00

(54) **Method of manufacturing a bag equipped with a spout**

(30) Priority: 04.03.2005 JP 2005061539
(71) Applicant: Toyo Jidoki Co., Ltd., Tokyo (JP)
(72) Inventor: Tsutsui, Shoji, Iwakuni-shi, Yamaguchi (JP); Nakamoto, Kakue, Iwakuni-shi, Yamaguchi (JP)
(74) Representative: Schubert, Siegmar

(57) **Abstract**

A method of manufacturing a bag (38) equipped with at least one spout, including the steps of holding a spout(s) (46, 47) inserted in a bag mouth(s) by spout gripping members (7) or inserting a spout(s) held by spout gripping members in a bag mouth(s), and sandwiching lightly the surface for sealing of the spout(s) with the bag mouth(s) interposed by heating plates (25) for an extremely brief time so that sealing does not occur, and then retreating the heating plates once, and then again sandwiching the surface for sealing of the spout(s) (46, 47) with the heating plates, thus thermally attaching the spout(s) to the bag mouth(s). If the axial rotational orientation of the spout (46, 47) drifts from the bag width direction, the spout is rotated in the spout gripping members (7) against friction force, so that the axial rotational orientation of the spout is corrected.

## Description

### BACKGROUND OF THE INVENTION

### 1. Field of the Invention

The present invention relates to a method and apparatus for manufacturing a bag equipped with a spout(s) by inserting a spout(s) in the mouth(s) of a bag and sealing the spout(s) and bag mouth(s) (including sealing of the opening part of the bag mouth(s)).

### 2. Description of the Related Art

The outline (or the outer shape) of the periphery of the part to be gripped of a spout is usually quadrilateral in a cross-section perpendicular to its axial direction as disclosed in, for instance, Japanese Patent Application Laid-Open (Kokai) Nos. H11-77860 and 2002-355904. On the other hand, the outline (or the outer shape) of the part for sealing (the part where the sealing is made or where the spout is attached to a bag) of the spout is usually a ship shape (or substantially rhombus) in a cross-section perpendicular to its axial direction; and its longitudinal (or the larger diagonal line) direction is oriented perpendicular or parallel to two parallel sides of the above-described part to be gripped of the spout.

In view of the above, for a typical spout, the axial rotational orientation of the part for sealing always has a fixed relationship with the orientation of the above-described two parallel sides of the part to be gripped. Therefore, if the spout holding members hold the two parallel sides of the part to be gripped of the spout or hold the spout guided by the two parallel sides, when the spout is held by the spout holding members, the axial rotational orientation of the part for sealing is always fixed. As a result, it is easy to align the axial rotational orientation of the part for sealing of the spout and the bag width direction when sealing is made between the spout(s) and the bag, particularly its bag mouth, and it is possible to obtain a good seal without wrinkles, etc.

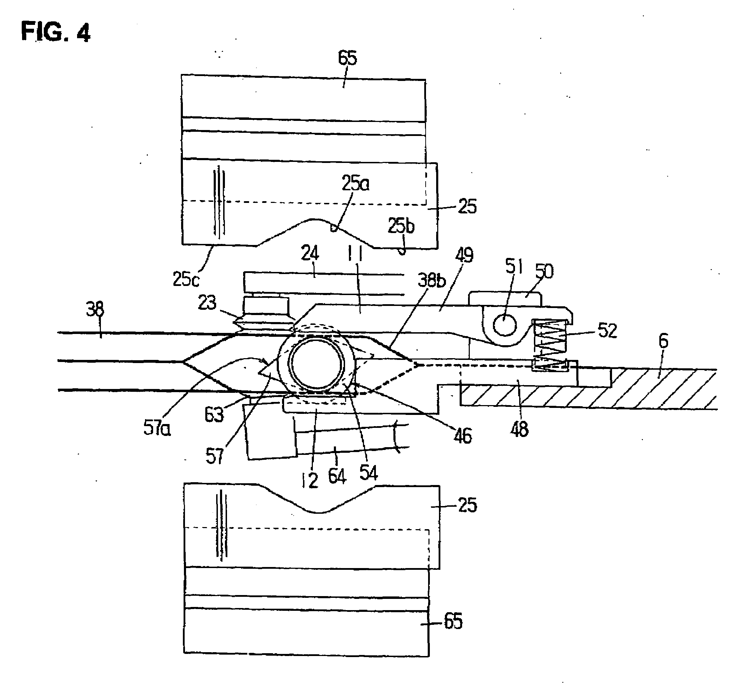

However, in some spouts, the outline of the periphery of the part to be gripped is circular (plane of rotation) and not quadrilateral in a cross-section perpendicular to its axial direction; and for such spouts, the axial rotational orientation of the spout cannot be accurately determined just by holding it with the spout holding members. If the spout(s) and bag mouth are sealed when the spout's axial rotational orientation (i.e. the axial rotational orientation of the part for sealing) and the bag's width direction have drifted (see dashed lines in Figure 4), even though the axial rotational orientation of the spout(s) is corrected slightly when it is held by the heating plates, sealing occurs while it is being corrected in its axial rotational orientation, and wrinkles occur at the seal part, etc., and a good seal (or the attachment of the spout(s) to the bag) cannot be achieved. Even if the seal (attachment) is made, the axial rotational orientation of the spout(s) in relation to the bag may not be appropriate.

On the other hand, even when the outline of the periphery of the part to be gripped of a spout is quadrilateral, sometimes the position of the spout is not appropriate.

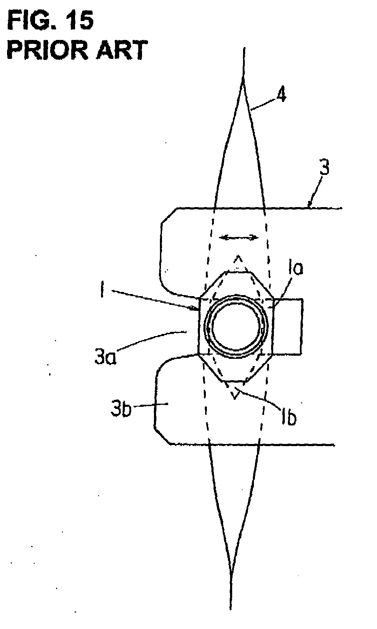

More specifically, in the spout 1 shown in Figure 15, its part to be gripped is located between upper and lower flanges (Figure 15 shows upper flange 1a); and this part to be gripped fits into a groove (or the empty space) 3a of a spout holding member 3, and the fork-like portions 3b on both sides of the spout holding member 3 sandwich the two parallel sides of the part to be gripped of the spout 1 from both its sides. In Figure 15, the reference numeral 4 refers to a bag. The longitudinal direction of the part for sealing 1b of the spout 1 is formed perpendicular to the two parallel sides of the quadrilateral spout, so the axial rotational orientation of the part for sealing part 1b of the spout 1 held in the spout holding member 3 is always fixed, but the position of the perpendicular direction (see the arrows in Figure 15) relative to the bag's width direction cannot be accurately determined. If the spout and bag mouth are sealed while the part for sealing 1b of the spout 1 is displaced in the perpendicular direction relative to the bag's width direction, when the heating plates press the part for sealing, the timing of when the two heating plates touch the part for sealing will be different on one side than on the other side, and a sealing (attachment) failure would occur.

In the example shown in Figure 15, displacement of the spout I can occur in the direction perpendicular to the bag width direction of the bag 4; however, if the orientation of the part for sealing 1b is set parallel to the two parallel sides fitting into the groove 3a, then displacement in the bag's width direction occurs.

Also, if there is play between the above-described two parallel sides of the part to be gripped of the spout 1 and the fork-like portions 3b of the spout holding member 3, there is a possibility that drift would occur in the axial rotational orientation of the spout as well.

As seen from the above, when a spout is held by a spout holding member, drift of the axial rotational orientation of the spout may occur relative to a bag positioned at a predetermined position, and displacement also may occur in the direction perpendicular to the bag width direction or in the bag width direction in a plane perpendicular to the axial direction of the spout.

### BRIEF SUMMARY OF THE INVENTION

The present invention is to overcome these problems of the prior art, and it is an object of the present invention to accomplish appropriate sealing even if drift of the axial rotational orientation and/or positional displacement occurs in a spout(s) held by a spout holding member.

The above object is accomplished by unique steps of the present invention for a method of manufacturing a bag equipped with at least one spout in which a spout(s) inserted in a bag mouth(s) of a bag is held by spout gripping members, and then the spout(s) is weld-sealing or attached to the bag mouth(s) with the bag mouth(s) being pressed from both surfaces thereof by sealing members; and in the present invention,
before sealing the spout(s) to the bag mouth(s) by the sealing members,
the surface for sealing of the spout(s) is pressed for a brief moment from both sides thereof (or sandwiched) by pressing members,
thus correcting the axial rotational orientation of the spout(s) held by the spout gripping members and/or the position of the spout(s) in a plane perpendicular to the axial direction of the spout(s).

In the above method of the present invention, correction of the orientation and/or position of the spout(s) is done by pressing the spout with the bag (bag mouth(s)) interposed (or with the bag mouth(s) in between) by the pressing members.

The present invention is applicable also to a case in which a spout(s) is held by spout gripping members and then the spout(s) is inserted into a bag mouth(s). In this case, correction of the orientation and/or position of the spout(s) is performed by pressing the surface for sealing of the spout(s) with the pressing members with the bag (bag mouth(s)) interposed after inserting the spout(s) in the bag mouth(s) or by directly pressing the surface for sealing of the spout(s) before inserting the spout(s) in the bag mouth(s).

The spout gripping members used in the present invention must be those that allow correction of the orientation and/or position of the spout(s) while the spout(s) is being held by the spout gripping members and that can hold the post-correction orientation and/or position of the spout(s) after the correction of the orientation and/or position of the spout(s) is made.

Furthermore, in the present invention, insertion of the spout(s) into the bag mouth(s) is accomplished not just by moving the spout(s) and inserting it into the bag mouth(s), it also includes moving the bag so that the bag mouth(s) covers the spout(s).

In addition, in the present invention, the "part for sealing" of the spout(s) means the location where the bag mouth is actually sealed and the location next to that location and formed in the same shape as that location.

In the method of the present invention, the outline of the surface for sealing of the spout is substantially a ship shape (or in a substantially rhombus shape with one pair of opposing corners rounded), and the pressing surfaces of the pair of pressing members are respectively formed in a shape that corresponds to the surface for sealing of the spout.

In the present invention, more specifically, the pair of sealing members also function as the pressing members; and the pair of sealing members briefly press the surface for sealing of the spout(s) inserted in the bag mouth(s) for a time so short that sealing does not occur, and the pair of sealing members temporarily separate from the surface for sealing, and then the pair of sealing members press the bag mouth(s) from both surfaces thereof and weld-seal or thermally attach the spout(s) to the bag mouth(s). This method sequentially performs correction and sealing using a two-stage motion of the sealing members, and the first pressing is completed in a brief time so short that the sealing operation does not occur. With this method, it is not necessary to provide separate pressing members.

In addition, in the present invention, the pressing members are disposed on support members on which said pair of sealing members are provided, so that the pressing members are located near the sealing members, are capable of advancing and retreating freely in the forward/backward direction thereof, and are constantly urged in the forward direction; and when sealing is performed by the sealing members, the pressing members press the surface for sealing of the spout(s) first and then the sealing members press the surface for sealing and weld-seal or thermally attach the spout(s) to the bag mouth(s). In this case, correction and sealing are performed by a one-stage motion of the sealing members.

In methods described above, pressing of the surface for sealing of the spout(s) with the pressing members is accomplished with the bag (bag mouth(s)) interposed.

The method of the present invention can be used preferably when the outer shape of the part to be gripped of a spout(s) forms a plane of rotation (or is a cylindrical shape), and the spout gripping members are openable and closeable, so that when the spout gripping members are closed the spout gripping members grip the part to be gripped of the spout(s) from both sides thereof at a predetermined pressure. If the outer shape of the part to be gripped of the spout(s) is a plane of rotation (or cylindrical), the part to be gripped works differently from the case of a quadrilateral shape because there is no surface that can be used as a guide when the part to be gripped is conveyed or passed or held, and it is difficult to constantly align the axial rotational orientation of the spout at a fixed orientation, and the axial rotational orientation of a spout held by spout gripping members often drifts from the set orientation. However, such spout(s) having cylindrical part to be gripped can be sealed or attached to a bag without any problem in the present invention.

In the present invention, at least one of the spout gripping members preferably has a gripping surface that is indented in a circular arc shape so as to comply with or match the outer shape of the part to be gripped of the spout(s) in order to prevent the spout(s) from drifting, for instance, to the side.

As seen from the above, according to the present invention, the surface for sealing of a spout(s) is pressed for a brief moment from both sides (sandwiched) by a pair of pressing members before sealing is made by the sealing members, thus correcting the axial rotational orientation of the spout(s) held by the spout gripping members and/or the position of the spout(s) in a plane perpendicular to the spout's axial direction. Accordingly, the spout(s) held by the spout gripping members is able to have the appropriate orientation and/or position during sealing, and it is possible to obtain an appropriate seal without sealing defects such as wrinkles, etc. when the spout(s) is sealed (attached) to the bag mouth(s).

### BRIEF DESCRIPTION OF THE SEVERAL VIEWS OF THE DRAWINGS

Figure 1 is an overall perspective view of an apparatus for manufacturing a bag equipped with a spout(s) according to the present invention;
Figure 2 is a top view of a bag to be supplied to the apparatus of Figure 1;
Figure 3 is a top view of the essential portion of the apparatus for manufacturing a bag equipped with a spout(s) at halting position IV (the sealing step position);
Figure 4 is a side view seen in the direction of arrow A in Figure 3 (before correction);
Figure 5 is a cross-sectional side taken in the direction of arrows 5-5 in Figure 3 (during correction);
Figure 6 is a side view seen in the direction of arrow C in Figure 5 (during correction);
Figure 7 is a cross-sectional view corresponding to Figure 5 showing the heating plates temporarily opened;
Figure 8 is a side view seen in the direction of arrow D in Figure 7;
Figure 9 is a diagram for explaining another sealing device in accordance with the present invention, Figure 9 being a cross-sectional view corresponding to Figure 4;
Figure 10 is a side view seen in the direction of arrow E in Figure 9;
Figure 11 is a cross-sectional view corresponding to Figure 9 when correction is performed by the spout gripping members;
Figure 12 is a side view seen in the direction of arrow F in Figure 10;
Figure 13 is a cross-sectional view corresponding to Figure 11 when sealing is performed by the heating plates;
Figure 14 is a view seen in the direction of arrow G in Figure 13; and
Figure 15 is a diagram explaining sealing of a bag and a spout with an ordinary shape.

### DETAILED DESCRIPTION OF THE INVENTION

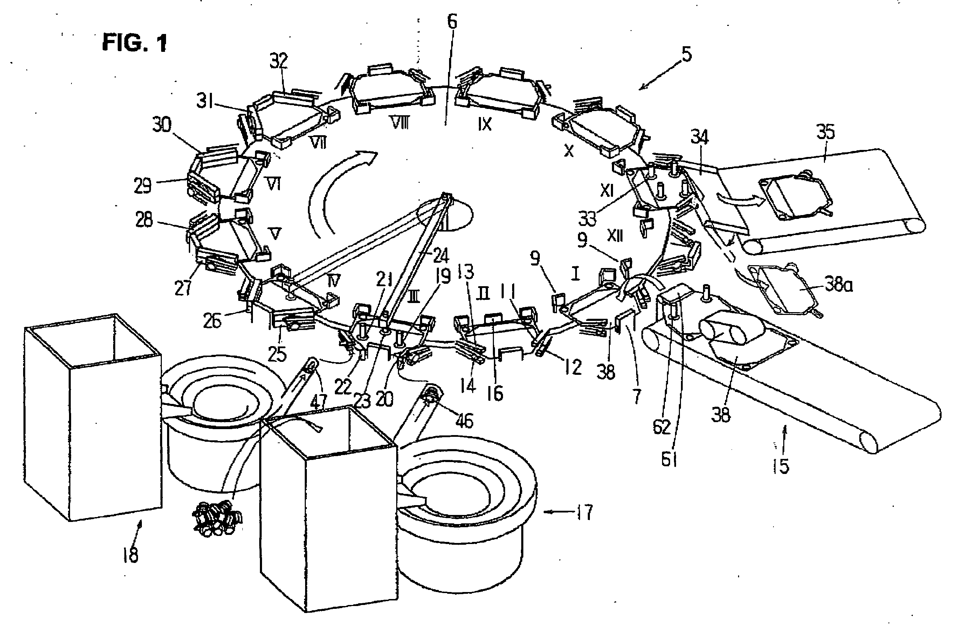

Below, the present invention will be described in detail with reference to Figures 1 through 14.

The apparatus for manufacturing a bag equipped with at least one spout is, as seen from Figure 1, comprised of an intermittently rotating table-type spout inserting and sealing apparatus 5 and various devices that are provided at locations corresponding to the halting positions of the intermittently rotating table-type spout inserting and sealing apparatus 5.

The spout inserting and sealing apparatus 5 includes a table 6 that rotates intermittently and a bag-gripping device (only an upper bag-gripping member 7 thereof is shown) that is disposed at each of the twelve (12) locations on the periphery of the table 6. A bag positioning device 8 (only bag positioning members 9 thereof are shown) and spout gripping members 11-14 that correspond to each bag-gripping member 7 are provided on the table 6.

The table 6 halts or makes stops twelve (12) times in the course of one rotation. The steps for manufacturing a bag equipped with spout(s) are sequentially performed at the halting positions.

In the structure of Figure 1, a conveyor magazine-type bag supply device 15 is disposed at halting position I, and a bag positioning device (only a pusher 16 thereof is shown) is disposed at halting position II.

Disposed the halting position III are spout supply devices 17 and 18, a bag mouth opening device (only suction cups 19-22 thereof are shown as bag mouth opening means), and a bag body expanding device (only its suction cup 23, which is one of the bag body expanding means, and a suction cup arm 24 are shown).

Sealing devices (only heating plates 25-30 thereof are shown as sealing means) are disposed at halting positions IV-VI

At the next halting position VII, cooling devices (only cooling plates 31 and 32 thereof are shown as cooling means) are disposed.

Disposed at halting positions VIII-X are detecting devices (not shown in the drawings).

A product extraction device (only a suction cup 33 thereof is shown), a vibrating-type product extraction chute 34, and a product transport conveyor 35 are disposed at halting position XI.

Halting position XII is an idle position.

Though not shown in Figure 1, pushers for operating the spout gripping members 11-14 are provided at halting positions III and XI, and a pusher that makes the bag gripping member 7 slant greatly outward is provided at halting position XI.

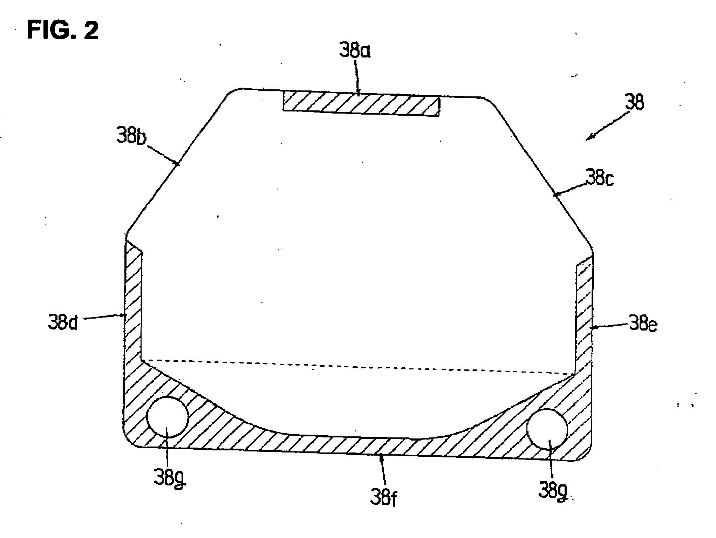

Figure 2 shows a bag 38 as raw material. Overall, the bag 38 is polygonal in shape and is made of plastic or thermoplastic films. The top edge 38a is horizontal (or straight), and shoulders 38b and 38c are cut at a slant on both sides thereof. The two parallel side edges 38d and 38e are vertical, and a bottom edge 38f is horizontal (or straight). Holes 38g are formed along the bottom edge 38f so that the bag can be suspended via the holes 38g upside down when, for example, in use. The sealed portions are shown by slanted lines. The portions near both shoulders 38b and 38c and the top edge 38a are unsealed, and these areas will be the bag mouth(s) where various differently shaped spout(s), typically made of rigid plastic, is sealed or attached.

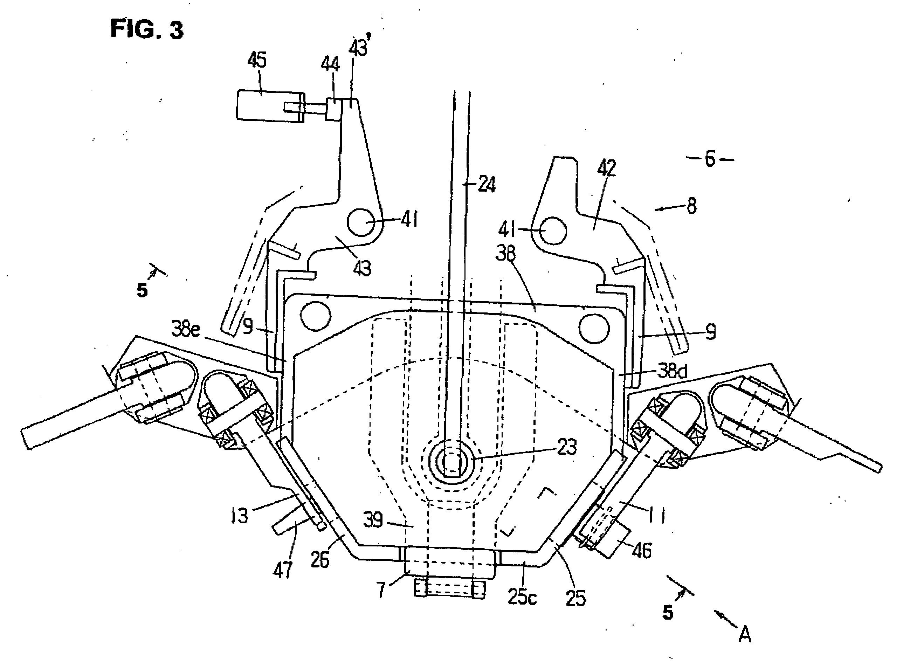

The bag gripping member 7 is a moveable member that has a downward-oriented gripping part. The bag gripping member 7 grips the bag 38 by working together with a lower bag gripping member 39 (shown by dotted lines in Figure 3) that is fixed to the lower side of the table 6 and that has an upward-oriented gripping part at the same height as the bag carrying surface of the table 6. The upper bag gripping member 7 is movable vertically by a drive source such as a cam that is not shown in the drawing (when the upper bag gripping member 7 moves downward, it grips the bag; and it release the bag when it moves upward). Also, at halting position XI, the upper bag gripping member 7 slants greatly outward by the operation of a pusher that is not shown in the drawing so that the bag can be removed in the radial direction of the table 6.

The bag positioning device 8 centrally positions the bag 38 in the lateral direction. As shown in Figure 3, the bag positioning device 8 comprises a pair of bag positioning members 9 and 9 that operate symmetrically. More specifically, the bag positioning members 9 and 9 are integrally formed at the tip-ends of levers 42 and 43, which are supported on swing lever shafts 41 (fixed to the table 6), so that the bag positioning members 9 and 9 can swing freely about the swing lever shafts 41. The bag positioning device 8 further includes a linking mechanism (not shown in the drawing) that links and symmetrically operates the bag positioning members 9 and 9, a drive source such as a cam, etc., and a stopper 44 that regulates the oscillation end 43' of the bag positioning members 9 and 9. The bag positioning members 9 and 9 are installed so that when they are driven by the drive source and oscillate in the direction shown by solid-line and the rear end 43' of the one levers 43 makes contact with the stopper 44 and halts, then they precisely touch with the side edges 38d and 38e of the bag 38. The position of the stopper 44 can be regulated by, for example, a spring with respect to an attachment member 45 fixed to the table 6.

The spout gripping members 11-14 grip spouts 46 and 47 (see Figure 1) from above and below. As to the one set of the spout gripping members 11 and 12, as seen from Figure 4, the lower spout gripping member l2 is integrally formed at the tip-end of an spout gripping arm 48 fixed to a recessed surface on the top of the table 6. The upper spout gripping member 11 is integrally formed at the tip-end of an spout gripping arm 49, and the spout gripping arm 49 is fixed to a swing lever shaft 51 swigably supported by a bearing 50 fixed to the spout gripping arm 48. The spout gripping arm 49 can oscillate freely and vertically about the swing lever shaft 51, and it is urged in the closed direction (a direction in which the spout gripping member 11 is moved downward) by a compression spring 52 interposed between the rear ends of the spout gripping arms 49 and 48. To open the spout gripping members 1 I and 12, the rear end of the spout gripping ann 49 is pressed from above by the previously described pusher and pushed it down (only the spout gripping member I I is moved). Conversely, the spout gripping arm 49 on front of the swing lever shaft 51 side can be pushed upward from below by the pusher.

The other spout gripping members 13 and 14 have basically the same structure as described above for the spout gripping members 11 and 12, except that they are used for spouts of different diameters from the spouts which the spout gripping members 11 and 12 grip.

The spout gripping members 11 and 12 are disposed so that they are parallel to the shoulder 38b of the bag 38 when the bag 38 is positioned on the table 6, and the center axis of the spout 46 is set to be perpendicular to the shoulder 38b. On the other hand, the spout gripping members 13 and 14 are disposed so that they are parallel to the shoulder 38c of the bag, and the center axis of the spout 47 is set to be perpendicular to the shoulder 38c.

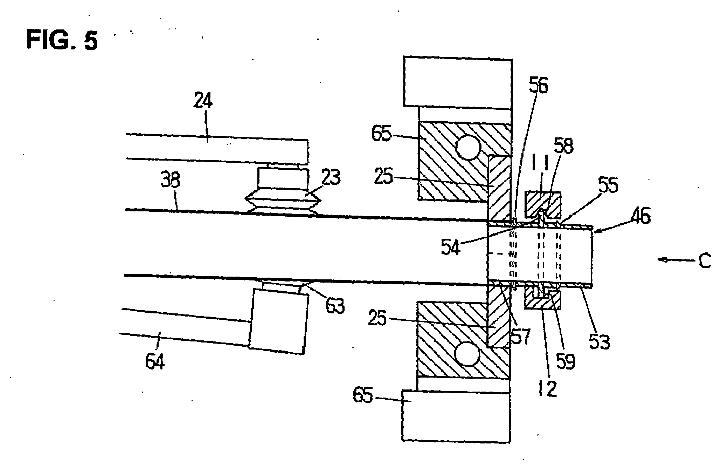

As shown in Figures 4 and 5, the spout 46 has a circular flange 54 formed on the periphery of a circular axis part 53, a ring-shaped cap lock part 55, and a circular small flange 56 for bag locking. A part for sealing 57 (its surface is the surface for sealing 57a that is sealed or attached to the bag mouth) that has a ship shape outline (or has a substantially rhombus shape with one pair of opposing corners rounded as best seen from Figure 4) is formed in the lower portion (the bag side) of the circular small flange 56. In the shown example, the circular flange 54 and the axis part 53 near it and the cap lock part 55 are what is called a "part to be gripped" of a spout in the present invention, where the spout is gripped by the spout gripping members 11-14.

As seen from Figure 5, a groove 58 is formed in the inner surface of the spout gripping member 11.. The groove 58 is triangular in cross-section and curved inward in a circular arc shape so as to match the outer shape of the circular flange 54 of the spout 46. The circular flange 54 of the spout fits into the groove 58 of the spout gripping member 11. The groove 58 thus makes the gripping surface that grips the part to be gripped of the spout 46 (particularly the circular flange 54) from above. On the other hand, the inner surface of the spout gripping member 12 is flat and has an indented groove 59 formed in its center, and the upper surfaces of both sides of the indented groove 59 and the bottom of the indented groove 59 form the gripping surface that grips the part to be gripped of the spout 46 (circular flange 54, axis part 53, cap lock part 55) from below. Thus, the spout gripping member 12 has a structure that supports the part to be gripped of the spout at three points.

The spout 47 and the spout gripping members 13 and 14 respectively have the same structures as the spout 46 and the spout gripping members 11 and 12.

The conveyor magazine-type bag supply device 15 disposed at halting position I transports stacked and staggered bags in such a manner that the bag mouths are aimed forward or toward the table 6 and the underlying bags are to the rear, and further, the leading bag is separated, one by one, and is transported forward. As shown in Figure 1, a reversing-type supply device 61 (only its grip part is shown) is provided at the front of the conveyor magazine-type bag supply device 15, so that it grips near the top edge 38a of the bag 38 lifted by a suction cup 62, reverses the bag 180°, and then supplies the bag 38 to the table 6.

The bottom edge 38f side of the bag 38 supplied to the table 6 is carried on the upper surface of the table 6, and the top edge 38a side of the bag 38 is carried on the upper surface of the grip part of the lower bag gripping member 39.

The pusher 16 of the bag positioning device is provided at halting position II. The pusher 16 is located on the top of the table 6; and it pushes the edge 38f of the bag 38, which has been laterally positioned by the bag positioning member 9 of the bag positioning device 8, causes the bag 38 to rise and touch the inside surface of the bag gripping member 7, and further positions it vertically (in the radial direction of the table 6).

The bag mouth opening device is disposed at halting position III, as shown in Figure 1, and it has suction cups 19-22 which are the bag mouth opening means. The suction cups 19 and 20 open the bag mouth on the shoulder 38b side of the bag 38, and the suction cups 21 and 22 open the bag mouth on the shoulder 38c side.

The bag body expanding device disposed near halting position III is comprised of an upper bag body expanding means and a lower bag body expanding means.

The upper bag body expanding means is the suction cup 23 previously described, which communicates, via changeover valves and filters (not shown in the drawing), with a vacuum pump through a pipe installed inside the suction cup arm 24. The suction cup arm 24 can be raised and lowered by a drive source such as a cam (not shown in the drawing), and it also swings in sync with the intermittent rotation of the table 6. The suction cup arm 24 is moved to follow the intermittent rotation of the table 6 as shown by dotted lines in Figure 1, and then it swings back to its original position as shown by solid lines in Figure 1. The suction cup 23 is raised and lowered upon the rising and lowering motions of the suction cup arm 24, and it makes reciprocating (swinging) movement between the halting position III and the next halting position IV according to the forward and return swing motions of the suction cup arm 24.

The lower bag body expanding means of the bag body expanding device is a suction cup 63 as shown in Figure 4. A suction cup arm 64 is oriented in the radial direction of the table 6 beneath it and is supported on the lower surface of the table 6 so that the suction cup arm 64 can oscillate vertically (the oscillation direction of the suction cup arm 64 is shown by the arrow in Figure 4). The suction cup 63 is disposed at the tip end of the suction cup suction cup arm 64. A vacuum pipe is provided inside the suction cup arm 64, and the suction cup 63 communicates, via changeover valves and filters (not shown in the drawing), with the shared vacuum pump by this pipe installed in the suction cup arm 64. It goes without saying that sets comprising the suction cup 63 and suction cup arm 64 are provided to correspond to each one of the bag gripping members 7 and 39 (in other words, twelve (12) sets of the suction cup 63 and suction cup arm 64 are provided).

When the suction cup arm 24 descends and the suction cup arm 64 is driven by a drive source such as a cam (not shown in the drawing) and is moved upward, the suction cups 23 and 63 suction the body of the bag 38 from above and below. When the suction cup arm 24 rises and the suction cup arm 64 is moved downward, the body of the bag 38 is expanded as shown in Figure 5.

The spout supply devices 17 and 18 insert spouts 46 and 47, one by one, into the relevant bag mouths (the shoulder 38b side and the shoulder 38c side) of the bag 38, which is halted at halting position III and whose bag mouths have been opened; they respectively comprise a socalled parts feeder and a spout inserting means that receives the spouts 46 and 47 one by one from the parts feeder, holds them, transports them to the predetermined position, and inserts them in the opened bag mouths. The spout 46, transported by the spout inserting means to the above-described predetermined position, is gripped by the spout gripping members 11 and 12, and the spout 47 is gripped by the spout gripping members 13 and 14. The lower portion of the spout 46 is held at three points by the gripping surface of the spout gripping member 12, and at its upper part the circular flange 54 enters the groove 58 of the spout gripping member 11, and is gripped at a predetermined pressure by the urging force of the compression spring 52.

When the spouts 46 and 47 are gripped by the spout gripping members 11-14, the spout inserting means releases the spouts 46 and 47 and returns to its original position.

The sealing devices provided at halting position IV have, as show in Figures 3-5, heating plates 25 and 25 (referred to as "sealing members") fixed to their respective support members 65 and 65.

More specifically, each one of the heating plates 25 and 25 (sealing members) has a central sealing surface 25a for pressing and sealing the spout 46 and the bag mouth on the shoulder 38b side of the bag 38, and side sealing surfaces 25b and 25c for pressing and sealing the unsealed part of the bag mouth on both sides (the two sides of the bag). The side sealing surface 25c, which seals the unsealed part from shoulder 38b near edge 38a to edge 38a near shoulder 38b, is curved when viewed from above (see Figure 3). The central sealing surface 25a is, as best seen from Figure 4, indented in a half ship shape (or curved inwardly) that corresponds to the outer shape of the surface for sealing 57a of the spout 46, which is substantially a ship shape (or is substantially rhombus with one pair of opposing corners rounded). Side pressing surfaces 25b and 25c are flat.

Support members 65 and 65 and heating plates 25 and 25 open and close in a two-stage motion by a drive means that is not shown in the drawing. The heating plates 25 and 25 very briefly press (the first stage) the surface for sealing 57a of the spout 46 inserted in the bag mouth on the shoulder 38b side of the bag 38, with the bag (bag mouth) interposed, and then temporarily separate from the surface for sealing 57, and then press again (the second stage) the bag mouth from both surfaces and weld-seal (or thermally attach) the surface for sealing 57 of the spout to the bag mouth, and simultaneously weld-seal (or thermally attach) the unsealed part of the bag mouth. In other words, the above-described heating plates 25 and 25 also function as what is referred to as the pressing members in the present invention.

The heating plates 26 and 26 have the same structure as the heating plates 25 and 25, and they open and close in the same two-stage motion as the heating plates 25 and 25.

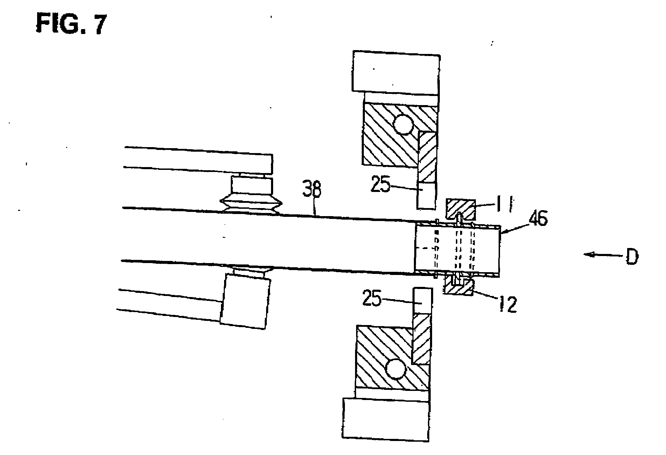

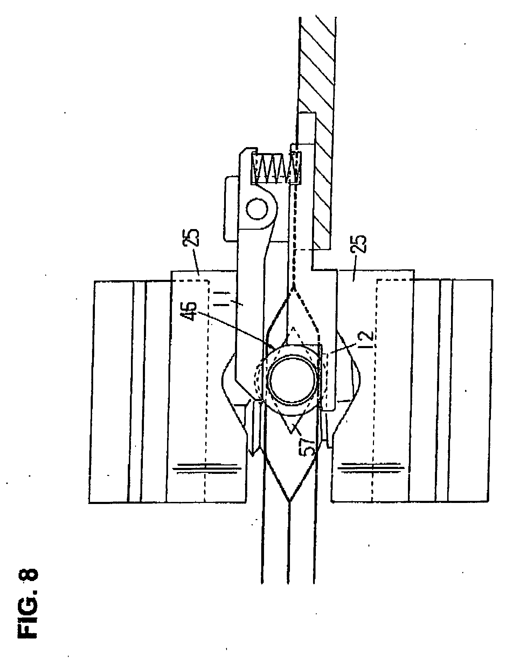

The movement of the heating plates 25 and 25 (same for the heating plates 26 and 26) will be described below with reference to Figures 4-8.
(a) Figure 4 shows the state at halting position IV before starting the first pressing (correction) using the heating plates 25 and 25. The body of the bag 38 is expanded by the suction cups 23 and 63, the spout 46 is inserted into the bag mouth of the shoulder 38b, and the spout 46 is gripped at a predetermined pressure by the spout gripping members l 1 and 12. At this time, the axial rotational orientation of the part for sealing 57 of the spout 46 (the orientation of the longitudinal direction of the ship shape (or the orientation in the direction of the larger diagonal line of the substantially rhombus-shaped part for sealing) drifts from the bag width direction (horizontal state).

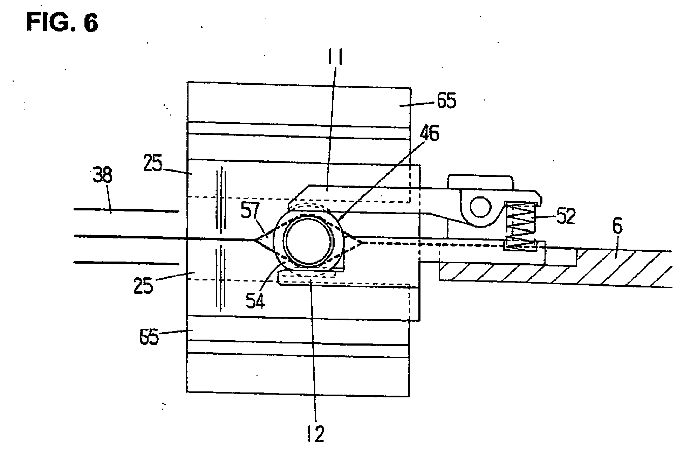

(b) Figures 5 and 6 show the state at the moment the heating plates 25 and 25 doss and the first pressing (correction) is performed. The axial rotational orientation of the part for sealing 57 of the spout 46 is corrected by the brief light pressing by the heating plates 25 and 25. More specifically, the spout 46 is being gripped by the spout gripping members 11 and 12 in a manner that it can rotate in the axial direction, and when the spout 46 is pressed from above and below by the heating plates 25 and 25 thus being sandwiched, it rotates inside the spout gripping members 11 and 12 against the frictional force that is caused by gripping.
(c) After momentary pressing described above that does not last long enough to cause sealing, the heating plates 25 and 25 open slightly, as shown in Figures 7 and 8. The post-correction orientation of the spout 46 is maintained as-is by the spout gripping members 11 and 12.
(d) The heating plates 25 and 25 immediately close and the second pressing (sealing) is performed. Through this, the spout and bag mouth and the bag surfaces near the bag mouth (the unsealed part) are weld-sealed and thermally attached. Then the heating plates 25 and 25 retreat and return to their original open state and the sealing step ends.

Next, the entire operation of this apparatus for manufacturing a bag equipped with a spout(s) will be described.
(1) At halting position I, the leading (first) bag 38 on the conveyor magazine-type bag supply device 15 is gripped by the reversing-type supply device 61, reversed 180°, and supplied to a predetermined position on the table 6. At this time, the upper bag-gripping member 7 has descended, and the positioning members 9 and 9 of the bag positioning device 8 are in their open state. The bag 38 is carried on the table 6 and gripping part of the lower bag-gripping member 39.
(2) The table 6 rotates; and while the bag 38 is moved from halting position I to halting position II, the positioning members 9 and 9 oscillate toward the inner side and position the bag 38 so that the bag 38 is laterally centered. The positioning members 9 and 9 subsequently maintain this bag centering state until they pass halting position X.
(3) At halting position II, the upper bag-gripping member 7 is raised, and then the pusher 16 provided at halting position II pushes the bag 38 outward in the radial direction of the table 6, so that the bag touches the inner surface of the upper bag-gripping member 7, thus performing positioning of the bag in vertical direction (in the vertical direction of the bag 38).
   Next, the upper bag-gripping member 7 is lowered and grips the part for sealing of the edge 38a of the bag 38 between the upper bag-gripping member 7 and the lower bag-gripping member 39. The upper bag-gripping member 7 subsequently remains at this descended position until it passes halting position X.
(4) At halting position III, the spout gripping members 11 and 12 and 13 and 14 are opened by pushers disposed at halting position III, and the suction cups 19 and 20 of the bag mouth opening device provided at halting position III open the bag mouth on the shoulder 38b side of the bag 38, and at the same time the suction cups 21 and 22 open the bag mouth on the shoulder 38c side.
   Next, the suction cup 23 of the bag body expanding device that returned to halting position III and the suction cup 63 provided on the lower surface of the table 6 work together to expand the body of the bag 38 (bag body). Expanding of the body of the bag 38 is performed a little after the opening of the bag mouths. This is because it is difficult to allow the air to flow into the bag interior if the bag mouths are not opened, making the expanding of the bag body difficult. The delay of expanding of the body of the bag 38 is also for the purpose of waiting for the suction cup arm 24 and suction cup 23 to return to the halting position III.
   The spout inserting means of the spout insertion device 17 next inserts the spout 46 in the bag mouth on the shoulder 38b side of the bag 38, and the spout inserting means of the spout insertion device 18 inserts the spout 47 in the bag mouth on the shoulder 38c side.
   Then, the above-described pushers retract and the spout gripping members 11-14 close and grip the spouts 46 and 47.
   Next, the spout inserting means release the spouts 46 and 47. Also, air is introduced into the suction cups 19-22, and the suction cups 19-22 are moved vertically and separated from the bag 38.
(5) The table 6 rotates; and when the bag 38 is moved from halting position III to halting position IV, the suction cup arm 24 and suction cup 23 of the bag body expanding device swing in sync with the table 6 to follow the rotation of the Gable 6. The lower suction cup 63 is provided on the table 6 and thus moved together with the table 6. Accordingly, the body of the bag 38 is suctioned by the suction cups 23 and 63 and arrives at halting position IV in an expanded state.
(6) At halting position IV the heating plates 25 and 25 operate in a two-stage motion as described above and correct the axial rotational orientation of the spout 46; then they seal (attach) the spout 46 to the shoulder 38b of the bag 38 and also seal the unsealed part of the shoulder 38b and the edge 38a. At the same time, the heating plates 26 and 26 also operate in a two-stage motion as described above and correct the axial rotational orientation of the spout 47; then they seal (attach) the spout 47 to the shoulder 38c of the bag 38 and also seal the unsealed part of the shoulder 38c and the edge 38a.
   The heating plates 25 and 25 and the heating plates 26 and 26 respectively open and return to their original positions. Air is introduced into the suction cups 23 and 63, which release the bag 38, and the arm 24 and the suction cup 23 ascend and swing back to halting position III.
   At halting position IV, as shown in Figure 4, etc., the body of the bag 38 is expanded by the suction cups 23 and 63 to a thickness that is about the same as the thickness of the part for sealing 57 of the spout 46. Therefore, no displacement of the spout 46 and the bag mouth occurs, and the line of the shoulder 38b of the bag is sealed straightly:
(7) Next, at halting position V, a second sealing is performed by heating plates 27 and 28, a third sealing is performed by heating plates 29 and 30 at halting position VI, and a cooling sealing is further performed at halting position VII by cooling plates 31 and 32. These operations are performed in one-stage motions. Additionally, various inspection processes are carried out at halting positions VIII-X.
(8) While the bag 38 is transported by the rotating table 6 from halting position X.to halting position XI, the positioning members 9 and 9 of the positioning device 8 are moved to open outward, the upper bag-gripping member 7 rises, and then the bag 38 is, as a result, released.
(9) At halting position XI, the spout gripping members 11 and 12 and 13 and 14 are opened by pushers provided at this halting position XI, and the bag gripping member 7 slants greatly outward by the pusher.
   Then, the suction cup 33 of the product extraction device descends and suctions the bag 38 (that is equipped with the spouts), transports it essentially horizontally to the product extraction chute 34, and releases it there. The bag 38 (with spouts) falls from the product extraction chute 34 onto a product transport conveyor 35 and is transported to outside the apparatus. When the bag 38 (which is a bag equipped with spouts) is removed from the table 6, the above-described pushers retract, closing the spout gripping members 11 and 12 and 13 and 14, and the bag gripping member 7 returns to its original raised position.
   If a defect(s) is detected in the bag 38 (that is equipped with the spouts) in the above-described inspection process, the product extraction chute 34 is moved downward as shown by the arrow and by imaginary lines in Figure 1, and the defective bag (indicated by 38a) falls into a separately disposed container (not shown in the drawing) and not onto the product transport conveyor 35.
(10) While the table 6 rotates from halting position XI to halting position XII, the upper bag-gripping member 7 descends. Halting position XII is an idle position; and the steps described above are subsequently repeated as the table 6 rotates.

In the above-described operation, both correction of the axial rotational orientation of the spout 47 and sealing are performed at halting position IV. However, the halting positions for the correction step and the sealing step can be separated. It is possible to design, for example, so that the axial rotational orientation of the spout 46 (and spout 47) is corrected by a pair of pressing members at halting position IV, and then the first sealing is performed at halting position V. In this structure, as pressing members, those that have a pressing surface with the same shape as the heating plates 26 and 26 (heating plates 27 and 27) but do not have a heating function are used.

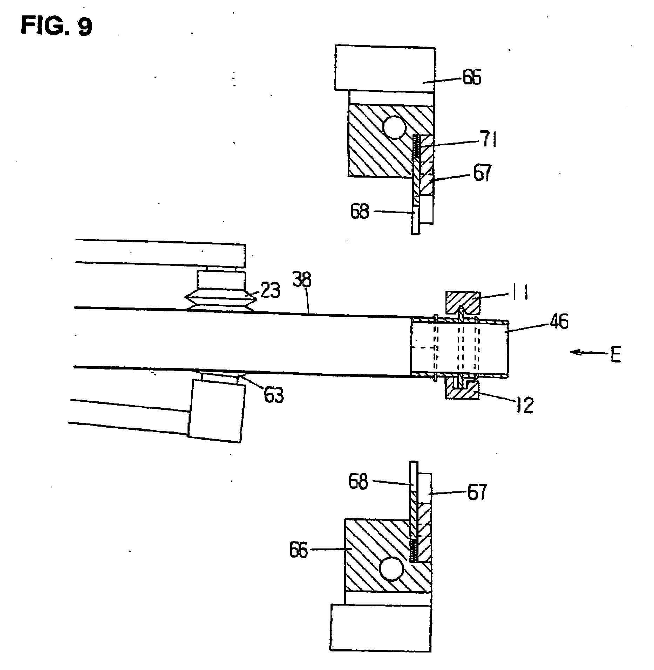

Figures 9-14 show a different type of sealing device that can be used at halting position IV in the spout insertion and sealing device 5. In Figures 9-14, elements other than the sealing device are the same as those in Figures 3-5, and they are assigned the same numbers as in Figures 3-5.

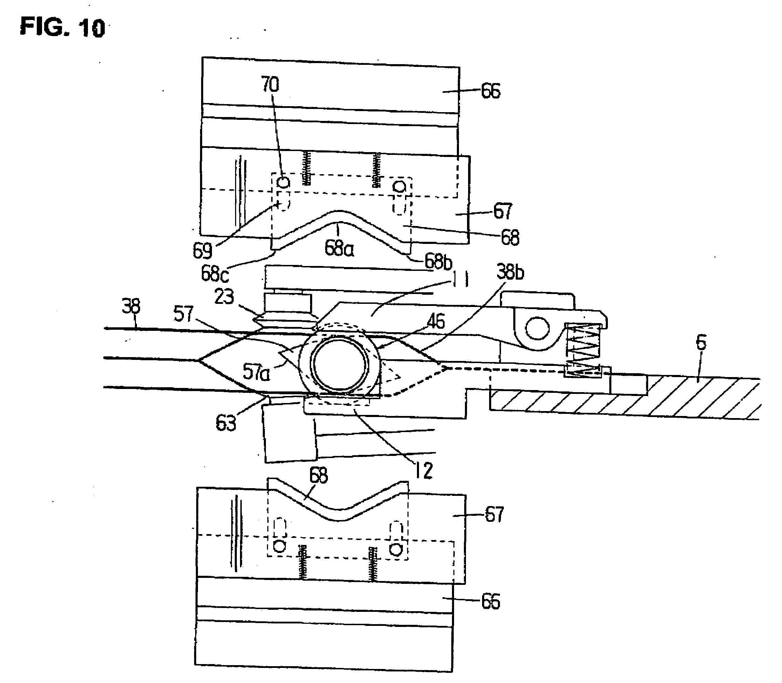

As seen from Figures 9 and 10, in this sealing device, a heating plate 67 is fixed to each one of the support members 66, and a pressing member 68 is provided between the support member 66 and the heating plate 67 so that the pressing member 68 can advance and retreat freely in the forward/backward direction. In other words, the pressing members 68 are provided so as to be able to advance and retreat freely in the forward/backward direction. More specifically, longitudinally long holes 69 are formed in the pressing member 68 so as to extend in the forward/backward direction, pins 70 fixed on each one of the heating plates 67 are fitted into the long holes 69, thus guiding the pressing members 68 in the forward/backward direction and keeping them from falling off the installation site. Furthermore, springs 71 are provided between the support member 66 and the pressing member 68, so that the pressing members 68 are constantly urged forward by the springs 71. As a result, the upper pressing member 68 is constantly urged by the springs 71 downward in Figure 10 and the lower pressing member 68 is constantly urged by the springs 71 upward; and in a no-load state, the pressing surfaces of the pressing members 68 at their tip project farther forward than the heating plate 67.

The heating plate 67 has substantially the same (solid) shape as the heating plate 25 described earlier; however, the heating plate 67 is thinner by exactly the thickness of the pressing member 68. The pressing member 68 is a flat plate; and it has a central pressing surface 68a, whose shape corresponds to the ship shape (or curved inwardly) that corresponds to the outer shape of the surface for sealing 57a of the spout 46, which (the surface for sealing 57a) is substantially a ship shape (or is substantially rhombus with one pair of opposing corners rounded), and narrow side pressing surfaces 68b and 68c at both sides thereof (to press the bag mouth near the surface for sealing 57a of the spout 46). As seen from Figure 10, the shape formed by the continuous central and side pressing surfaces 68a-68c of each one of the pressing member 68 is the same as the shape of the sealing surface of each heating plate 67 (the sealing surface being located at the central portion of the heating plate 67 in its lateral or width direction in Figure 10), and the width of the continuous central and side pressing surfaces 68a-68c is slightly larger (wider) than the length of the part for sealing 57 of the spout 46.

The movements of the heating plates 67 and 67 and pressing members 68 and 68 shall be described with reference to Figures 9-14.
(a) Figures 9 and 10 show the state at halting position IV before starting pressing using the heating plates 67 and 67. The body of the bag 38 is expanded by the suction cups 23 and 63, the spout 46 is inserted in the bag mouth on the shoulder 38b side, and the spout is gripped at a predetermined pressure by the respective spout gripping members 11 and 12. At this point, the axial rotational orientation of the part for sealing 57 of the spout 46 (the orientation of the longitudinal direction of the ship shape (or the orientation in the direction of the larger diagonal line of the substantially rhombus-shaped part for sealing)) drifts from the bag width direction (horizontal state).

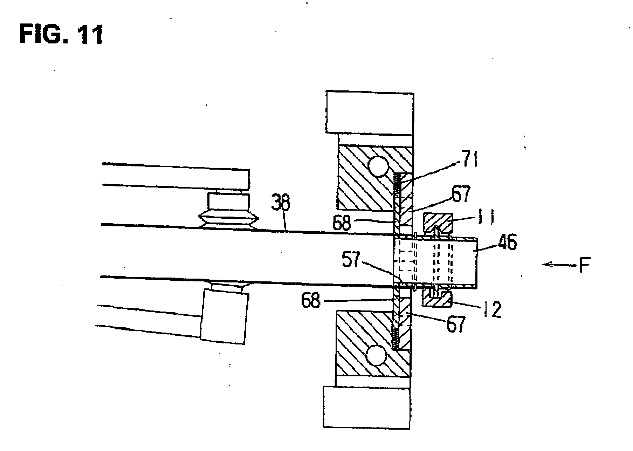

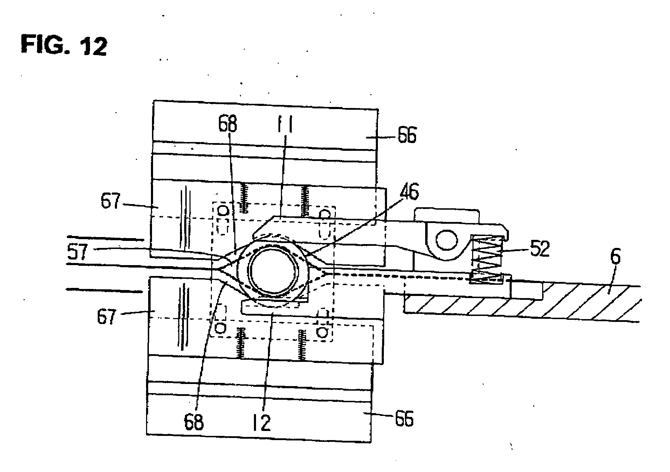

(b) Figures 11 and 12 show the state at the moment when the heating plates 67 and 67 and pressing members 68 and 68 have advanced, and the pressing members 68 and 68 have closed and press the part for sealing 57 of the spout 46, and the pressing pressure operates according to the urging force of the springs 71, and the axial rotational orientation of the part for sealing 57 is corrected. Following this moment, movement of the pressing members 68 and 68 halts, and only the heating plates 67 and 67 continue to advance due to the motion of the support members 66 and 66.

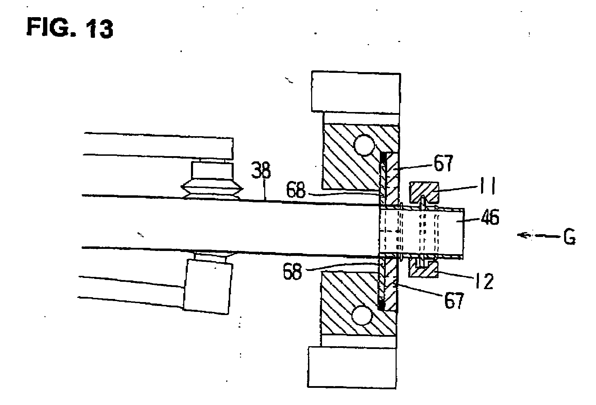

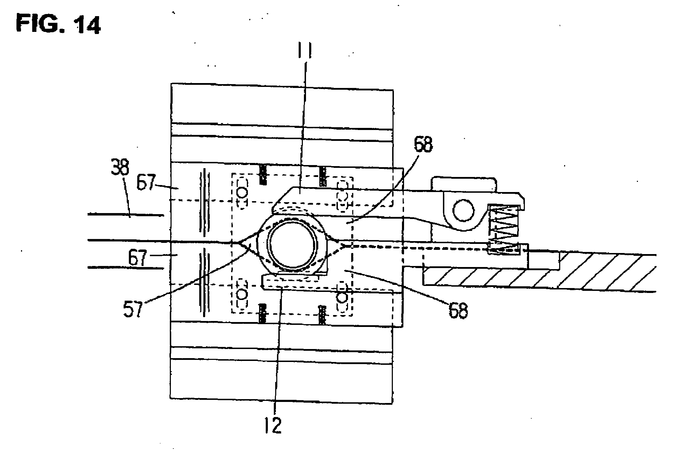

(c) Figures 13 and 14 show the state when the heating plates 67 and 67 have closed and press the part for sealing 57 of the spout 46 and sealing is performed. As a result, the spout 46 and bag mouth of the bag 38 and the unsealed part near the bag mouth (the bag surfaces) are weld-sealed or thermally attached together. Then, the heating plates 67 and 67 and the pressing members 68 and 68 retreat and return to their original open state and the sealing step ends.

As seen from the above, in this sealing device, correction and sealing are performed in a single motion of the support members 66.

In the above, the present invention is described with reference to a bag that is formed with two bag mouths at the shoulders. However, the present invention is applicable to a bag that has only one bag mouth so that a single spout is sealed or attached to this single mouth bag. When a single spout is attached to a bag having a single mouth, only the spout gripping members 11 and 12 and the one-side sealing device (the heating plates 25) are used with the bag mouth opening devices (the suction cups 19 and 20) and the spout supply device 17 or instead only the spout gripping members 13 and 14 and the other-side sealing device (the heating plates 26) are used with the bag mouth opening devices (the suction cups 21 and 22) and the spout supply device 18.

## Claims

1. A method of manufacturing a bag equipped with at least one spout, said method comprising the steps of:
holding a spout inserted in at least one bag mouth of a bag by spout gripping members, and then
weld-sealing the spout to the bag mouth with the bag mouth being pressed from both surfaces thereof by a pair of sealing members;
wherein said method:
before sealing the spout to the bag mouth by said sealing members,
presses a surface for sealing of the spout from both sides thereof by a pair of pressing members,
thus correcting an axial rotational orientation of the spout held by said spout gripping members and/or a position of the spout in a plane perpendicular to an axial direction of the spout.

2. A method of manufacturing a bag equipped with at least one spout, said method comprising the ordered steps of:
gripping a spout by spout gripping members,
inserting the spout in at least one bag mouth of a bag, and
weld-sealing the spout to the bag mouth with the bag mouth being pressed from both surfaces thereof by a pair of sealing members;
wherein said method:
before sealing the spout to the bag mouth by said sealing members,
presses a surface for sealing of the spout from both sides thereof by a pair of pressing members,
thus correcting an axial rotational orientation of the spout held by said spout gripping members and/or a position of the spout in a plane perpendicular to an axial direction of the spout.

3. The method of manufacturing a bag equipped with at least one spout according to Claim 1 or 2, wherein
an outline of the surface for sealing of the spout is substantially a shipshape, and
pressing surfaces of said pair of pressing members are respectively formed in a shape that corresponds to the surface for sealing of the spout.

4. The method of manufacturing a bag equipped with at least one spout according to any one of Claims 1 through 3, wherein
said pair of sealing members also function as said pressing members, and
said pair of sealing members briefly press the surface for sealing of the spout inserted in the bag mouth for a time so short that sealing does not occur, and
said pair of sealing members temporarily separate from the surface for sealing, and then
said pair of sealing members press the bag mouth from both surfaces thereof and weld-seal the spout to the bag mouth.

5. The method of manufacturing a bag equipped with at least one spout according to any one of Claims 1 through 3, wherein
said pressing members are disposed on support members on which said pair of sealing members are provided, so that said pressing members are near said sealing members, are capable of advancing and retreating freely in a forward/backward direction thereof, and are constantly urged in the forward direction thereof; and
when sealing is performed by said sealing members, said pressing members press the surface for sealing of the spout first and then said sealing members press the surface for seating and weld-seal the spout to the bag mouth.

6. The method of manufacturing a bag equipped with at least one spout according to any one of Claims 1 through Claim 5, wherein
an outer shape of a part to be gripped of the spout is cylindrical, and
said spout gripping members are openable and closeable, and
said spout gripping members, when closed, grip the part to be gripped of the spout from both sides thereof at a predetermined pressure.

7. The method of manufacturing a bag equipped with at least one spout according to Claim 6, wherein at least one of said spout gripping members has a gripping surface that is indented in a circular arc shape that matches the outer shape of the part to be gripped of the spout.
